# EUROPÄISCHE PATENTSCHRIFT

(11) **EP 0 737 379 B1**
(45) Veröffentlichungstag und Bekanntmachung des Hinweises auf die Patenterteilung: **11.11.1998**
(21) Anmeldenummer: 95900662.8
(22) Anmeldetag: 24.11.1994
(51) Int. Cl.: H02M 3/156

(54) **SPANNUNGSWANDLER**
VOLTAGE TRANSFORMER
TRANSFORMATEUR DE TENSION

(30) Priorität: 01.12.1993 DE 4340991
(43) Veröffentlichungstag der Anmeldung: 16.10.1996
(73) Patentinhaber: ROBERT BOSCH GMBH, 70442 Stuttgart (DE)
(72) Erfinder: BORHO, Lothar, D-77731 Willstaett (DE); KNUETEL, Manfred, D-85748 Garching (DE)
(86) Internationale Anmeldenummer: DE9401393
(87) Internationale Veröffentlichungsnummer: WO9515608

(56) Entgegenhaltungen:
- EP-A- 0 517 493
- DE-A- 1 940 504
- DE-A- 2 250 575
- US-A- 4 964 028
- US-A- 5 057 765

## Beschreibung

### Stand der Technik

Die Erfindung geht aus von einem Spannungswandler nach der Gattung des Hauptanspruchs. In einem Fachbuch von U. Tietze und Ch. Schenk, "Halbleiter-Schaltungstechnik", 9. Auflage, Springer-Verlag 1989, Seiten 561 - 572 sind Spannungswandler beschrieben, die eine Gleichspannung in eine vorgegebene Gleichspannung am Ausgang umformen. Den Spannungswandlern liegt ein getaktetes Schaltprinzip zugrunde, bei dem die in einem induktiven Element gespeicherte induktive Energie in Abhängigkeit von dem Verhältnis zwischen Einschaltzeit und Ausschaltzeit eines Leistungsschalters festgelegt wird. Die einfachsten Schaltungen enthalten lediglich einen Leistungsschalter sowie eine Speicherdrossel. Ein am Ausgang des Spannungswandlers angeordneter Glättungskondensator reduziert den Wechselspannungsanteil in der Ausgangsspannung. Im Kapitel 18.6.1 sind drei Grundformen von Spannungswandlern beschrieben. Es handelt sich um einen Abwärtswandler, einen Aufwärtswandler sowie um einen invertierenden Wandler. In Kapitel 18.6.2 ist ein Schaltungsbeispiel eines Abwärtswandlers gezeigt, bei dem die Ausgangsspannung auf einen vorgegebenen Wert geregelt wird. Die Regelschaltung sowie die für die Ansteuerung des Leistungsschalters erforderliche Baugruppen sind in einem integrierten Schaltkreis enthalten.

Aus dem Dokument US-A-5 057 765 ist ein Spannungswandler mit den Merkmalen des Oberbegriffs des Anspruchs 1 bekannt. Der Erfindung liegt die Aufgabe zugrunde, einen Spannungswandler anzugeben, der besonders preisgünstig realisierbar ist.

Die Aufgabe wird durch die im Hauptanspruch angegebenen Merkmale gelöst.

### Vorteile der Erfindung

Der erfindungsgemäße Spannungswandler weist den Vorteil auf, daß nur wenige diskrete Bauelemente benötigt werden. Der erfindungsgemäße Spannungswandler kann daher besonders kostengünstig realisiert werden. Vorteile machen sich insbesondere in einer Serienproduktion bemerkbar. Erfindungsgemäß ist vorgesehen, daß ein Sensor zum Erfassen eines in einer Speicherdrossel fließenden Stroms sowie Mittel zum Vergleich des erfaßten Stroms mit einem vorgegebenen Schwellwert vorgesehen sind. Bei einem Durchschreiten des Schwellwertes wird der Leistungsschalter geschaltet. Weiterhin ist ein Zeitgeber vorgesehen, der nach dem Auftreten eines Spannungssprungs an der Speicherdrossel den Leistungsschalter für die vom Zeitgeber festgelegte Zeit in dem gerade vorhandenen Zustand hält. Der Spannungssprung an der Speicherdrossel tritt infolge des Schaltens des Leistungsschalters auf. Der Zeitgeber legt die Ausschaltzeit oder die Einschaltzeit des getakteten Spannungswandlers fest.

Vorteilhafte Weiterbildungen und Ausgestaltungen des erfindungsgemäßen Spannungswandlers ergeben sich aus abhängigen Ansprüchen.

Gemäß einem ersten vorteilhaften Ausführungsbeispiel des erfindungsgemäßen Spannungswandlers ist vorgesehen, daß beim Überschreiten des Schwellwerts der Leistungsschalter abgeschaltet wird. Der Zeitgeber hält dann den Leistungsschalter für die vom Zeitgeber festgelegte Zeit im ausgeschalteten Zustand. Diese Ausgestaltung ist insbesondere vorteilhaft bei einer schwankenden Eingangsspannung.

Gemäß einem anderen vorteilhaften Ausführungsbeispiel des erfindungsgemäßen Spannungswandlers ist vorgesehen, daß beim Unterschreiten des Schwellwerts der Leistungsschalter eingeschaltet wird. Der Zeitgeber hält den Leistungsschalter für die vom Zeitgeber festgelegte Zeit im eingeschalteten Zustand, nachdem der Spannungssprung an der Speicherdrossel aufgetreten ist. Der Zeitgeber legt bei dieser Ausgestaltung die Einschaltzeit des Leistungsschalters fest. Diese Ausgestaltung ist insbesondere geeignet bei Spannungswandlern, deren Eingangsspannung relativ konstant ist.

Ein besonders preiswerter Stromsensor ist ein ohmscher Widerstand, an dem der fließende Strom einen Spannungsabfall verursacht, der ausgewertet wird. Als Vergleichsmittel ist insbesondere ein Transistor geeignet, dessen Steuerspannung, die für das Durchschalten des Transistors erforderlich ist, ein Maß für den vorzugebenden Schwellwert bildet. Der Transistor wird im folgenden als Steuertransistor bezeichnet.

Eine vorteilhafte Ausgestaltung betrifft den Zeitgeber, der vorzugsweise als eine Widerstands-Kondensator-Kombination realisiert ist. Der Zeitgeber kann an einem Steuereingang des Leistungsschalters angeschlossen sein. Vorzugsweise ist der Zeitgeber am Steueranschluß des Steuertransistors angeschlossen.

Eine besonders vorteilhafte Weiterbildung sieht vor, daß ein Spannungsbegrenzungselement vorgesehen ist, das am Ausgang des Spannungswandlers angeschlossen ist. Bei einem Überschreiten der Begrenzungsspannung hält das Spannungsbegrenzungselement den Leistungsschalter im abgeschalteten Zustand. Ebenso wie der Zeitgeber kann das Spannungsbegrenzungselement entweder unmittelbar am Steuereingang des Leistungsschalters oder vorzugsweise am Steueranschluß des Steuertransistors angeschlossen sein. Mit dieser Maßnahme wird nicht nur eine Begrenzung der Ausgangsspannung des Spannungswandlers auf einen vorgegebenen maximalen Wert erreicht, sondern auch eine Stabilisierung der Ausgangsspannung. Die Stabilisierung kommt dadurch zustande, daß die Ausgangsspannung bei dem zugrundeliegenden einfachen getakteten Schaltungskonzept des Spannungswandlers bei kleinerwerdenden Lastströmen die Tendenz hat, auf höhere Werte anzusteigen. Dieser Anstieg wird zuverlässig verhindert. Verbunden damit ist eine Stabilisierung der Ausgangsspannung.

Eine andere, besonders vorteilhafte Weiterbildung sieht die Kombination eines Abwärtswandlers mit einem Aufwärtswandler vor, wobei lediglich eine Speicherdrossel das erforderliche gemeinsame induktive Element bildet. Der wesentliche Vorteil der Kombination von Abwärtswandler und Aufwärtswandler liegt darin, daß die Eingangsspannung des Spannungswandlers Werte aufweisen kann, die sowohl unterhalb als auch oberhalb der vorgegebenen Ausgangsspannung liegen.

Weitere vorteilhafte Weiterbildungen und Ausgestaltungen des erfindungsgemäßen Spannungswandlers ergeben sich aus weiteren abhängigen Ansprüchen und aus der folgenden Beschreibung.

### Zeichnung

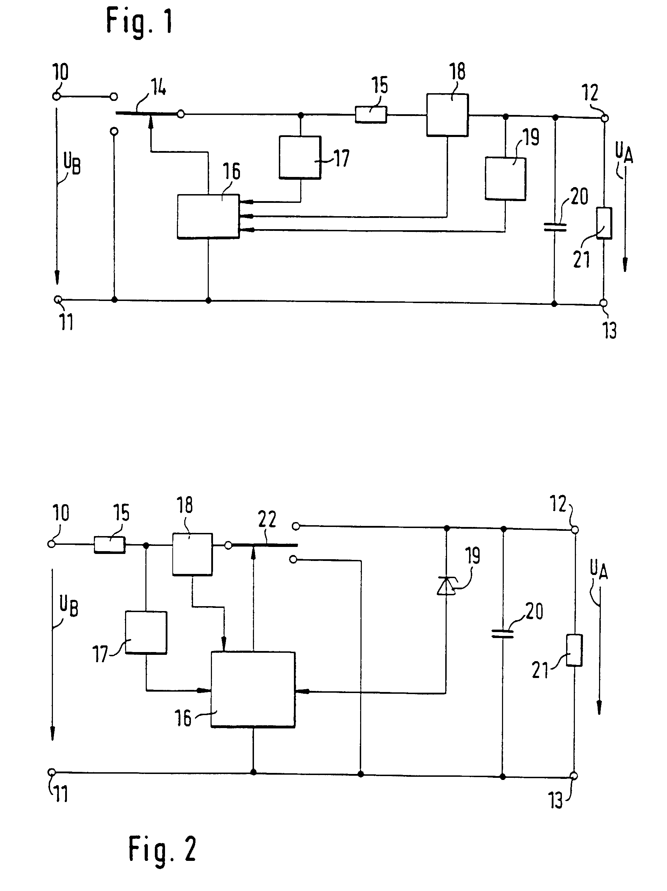

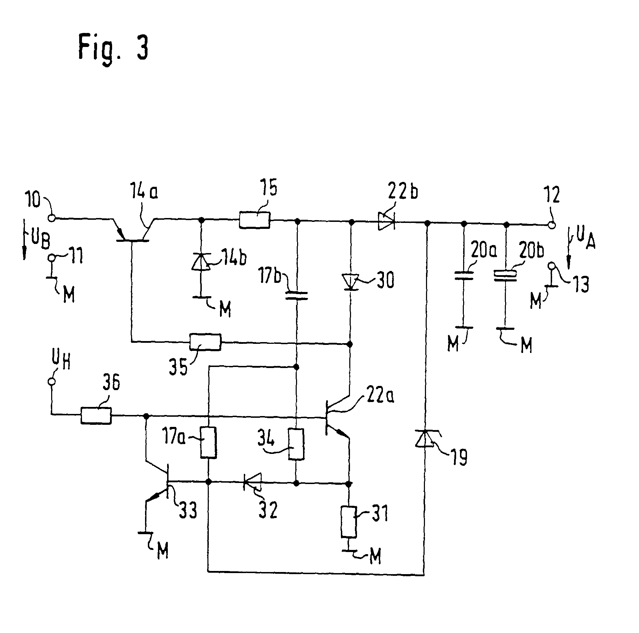

Figur 1 zeigt ein Blockschaltbild eines erfindungsgemäßen Spannungswandlers, der als Abwärtswandler geschaltet ist, Figur 2 zeigt ein Blockschaltbild eines erfindungsgemäßen Spannungswandlers, der als Aufwärtswandler geschaltet ist und Figur 3 zeigt ein Detailschaltbild eines Abwärts-Aufwärtswandlers.

### Beschreibung der Ausführungsbeispiele

Figur 1 zeigt ein Blockschaltbild eines Abwärtswandlers, der eine zwischen zwei Eingangsklemmen 10, 11 liegende Gleichspannung U_{B} in eine zwischen zwei Ausgangsklemmen 12, 13 abgreifbaren Ausgangsspannung U_{A} umwandelt. Vorgesehen ist ein Leistungsschalter 14, der eine Speicherdrossel 15 entweder mit der Eingangsklemme 10 oder mit der anderen Eingangsklemme 11 verbindet. Der Leistungsschalter 14 wird von einer Ansteuerung 16 betätigt, die Eingangssignale von einem Zeitgeber 17, von einem Stromsensor 18 und vom einem Spannungsbegrenzungselement 19 zugeführt erhält. Im gezeigten Ausführungsbeispiel ist der Zeitgeber 17 an einer Verbindung zwischen dem Leistungsschalter 14 und der Speicherdrossel 15 angeschlossen. Im gezeigten Ausführungsbeispiel ist der Stromsensor 18, der den in der Speicherdrossel 15 fließenden Strom erfaßt, ausgangsseitig nach der Speicherdrossel 15 angeordnet. Das Spannungsbegrenzungselement 19 ist an der Ausgangsklemme 12 angeschlossen. Zwischen den Ausgangsklemmen 12, 13 ist ein Glättungskondensator 20 und eine Last 21 geschaltet.

Figur 2 zeigt ein Blockschaltbild eines Aufwärtswandlers. Diejenigen in Figur 2 gezeigten Teile, die mit den in Figur 1 gezeigten Teilen übereinstimmen, tragen jeweils dieselben Bezugszeichen. Die Speicherdrossel 15 ist unmittelbar mit der Eingangsklemme 10 verbunden. Ein ausgangsseitig nach der Speicherdrossel 15 angeordneter Leistungsschalter 22 verbindet ausgangsseitig die Speicherdrossel entweder mit der Ausgangsklemme 12 oder mit der Eingangsklemme 11.

Figur 3 zeigt ein Detailschaltbild eines Abwärts-Aufwärtswandlers, wobei die in Figur 3 gezeigten Teile, die mit den in den Figuren 1 und 2 gezeigten Teilen übereinstimmen, jeweils wieder dieselben Bezugszeichen tragen. Der in der Figur 1 gezeigte Leistungsschalter 14 ist ersetzt durch einen ersten Schalttransistor 14a in Verbindung mit einer ersten Freilaufdiode 14b. Ein Emitteranschluß des ersten Schalttransistors 14a ist mit der Eingangsklemme 10 verbunden. Die andere Eingangsklemme 11 ist an einer Masse M angeschlossen. Ein Kollektoranschluß des ersten Schalttransistors 14a ist mit der Speicherdrossel 15 verbunden. An der Verbindung zwischen dem ersten Schalttransistor 14a und der Speicherdrossel 15 ist der Kathodenanschluß der ersten Freilaufdiode 14b angeschlossen, deren Anode an Masse M liegt.

Der in Figur 2 gezeigte Leistungsschalter 22 ist in Figur 3 durch den zweiten Schalttransistor 22a in Verbindung mit einer zweiten Freilaufdiode 22b ersetzt. Die zweite Freilaufdiode 22b ist an der Speicherdrossel 15 angeschlossen. Der in den Figuren 1 und 2 gezeigte Glättungskondensator 20 ist in Figur 3 aufgeteilt in einen ersten Glättungskondensator 20a mit kleiner Kapazität und einen zweiten Glättungskondensator 20b mit einer hohen Kapazität. An der Verbindung von zweiter Freilaufdiode 22b und Speicherdrossel 15 liegt eine Trenndiode 30, die zu einem Kollektoranschluß des zweiten Schalttransistors 22a führt, dessen Emitteranschluß über einen Strommeßwiderstand 31 an Masse M geschaltet ist. Am Strommeßwiderstand 31 ist weiterhin eine Schutzdiode 32 angeschlossen, deren Kathodenanschluß an einen Basisanschluß eines Steuertransistors 33 gelegt ist.

Der Basisanschluß des Steuertransistors 33 ist ferner mit einem Widerstand 17a verbunden, der ein Teil einer Widerstands-Kondensator-Kombination ist, die noch den Kondensator 17b enthält. Die Widerstands-Kondensator-Kombination 17a, 17b bildet den in den Figuren 1 und 2 gezeigten Zeitgeber 17. Der Kondensator 17b ist ausgangsseitig an der Speicherdrossel 15 angeschlossen. An der Verbindung zwischen dem Kondensator 17b und dem Widerstand 17a der Widerstands-Kondensator-Kombination 17a, 17b ist ein Ladewiderstand 34 angeschlossen, der zum Emitteranschluß des zweiten Schalttransistors 22a führt. Der Kollektoranschluß des zweiten Schalttransistors 22a, an dem der Kathodenanschluß der Trenndiode 30 liegt, ist über einen Strombegrenzungswiderstand 35 mit einem Basisanschluß des ersten Schalttransistors 14a verbunden.

Sowohl ein Kollektoranschluß des Steuertransistors 33 als auch ein mit dem Kollektoranschluß verbundener Basisanschluß des zweiten Schalttransistors 22a liegen über einen Arbeitswiderstand 36 an einer Hilfsspannung U_{H}.

Das Spannungsbegrenzungselement 19 liegt zwischen der Ausgangsklemme 12 und dem Basisanschluß des Steuertransistors 33.

Die Arbeitsweise des erfindungsgemäßen Spannungswandlers wird zunächst anhand des in Figur 1 gezeigten Blockschaltsbilds näher erläutert:

Der Spannungswandler ist als einfacher Drosselwandler mit der Speicherdrossel 15 realisiert, dessen Grundlagen in dem eingangs genannten Stand der Technik angegeben sind. Zugrundegelegt ist ein Abwärtswandler, der die zwischen den Eingangsklemmen 10, 11 liegende Spannung U_{B} in eine niedrigere, zwischen den Ausgangsklemmen 12, 13 auftretenden Ausgangsspannung U_{A} umsetzt. Neben der Speicherdrossel 15 ist ein wesentliches Element der Leistungsschalter 14, der die in der Speicherdrossel 15 gespeicherte magnetische Energie festlegt in Abhängigkeit von der Zeit, in der der Leistungsschalter 14 die Speicherdrossel 15 mit der Eingangsklemme 10 verbindet. Die sich ergebende Ausgangsspannung hängt neben dieser Zeit, die als Einschaltzeit bezeichnet ist, von der Dauer der Ausschaltzeit ab, bei der der Leistungsschalter 14 die Speicherdrossel 15 mit der anderen Eingangsklemme 11 verbindet. Erfindungsgemäß ist vorgesehen, daß die Einschaltzeit oder die Ausschaltzeit des Leistungsschalters 14 in Abhängigkeit von dem in der Speicherdrossel 15 fließenden Strom erfolgt. Zur Erfassung des Stroms ist der Sensor 18 vorgesehen, der Mittel zum Vergleich des erfaßten Stroms mit einem vorgegebenen Schwellwert aufweist. In Abhängigkeit von einer Durchschreitung des Schwellwerts wird das vom Stromsensor 18 abgegebene Signal der Ansteuerung 16 zugeführt.

Gemäß einem ersten Ausführungsbeispiel ist vorgesehen, daß beim Überschreiten eines vorgegebenen Schwellwerts des in der Speicherdrossel 15 fließenden Stroms eine Ausschaltung des Leistungsschalters 14 vorgesehen ist, die einer Verbindung der Speicherdrossel 15 über den Leistungsschalter 14 mit der Eingangsklemme 11 entspricht.

Gemäß einem anderen Ausführungsbeispiel ist vorgesehen, daß beim Unterschreiten eines vorgegebenen Schwellwerts des in der Speicherdrossel 15 fließenden Stroms ein Einschalten des Leistungsschalters 14 vorgesehen ist, bei dem die Speicherdrossel 15 mit der Eingangsklemme 10 verbunden ist.

Vorgesehen ist der Zeitgeber 17, der in Abhängigkeit vom Ausführungsbeispiel entweder die Ausschaltzeit oder die Einschaltzeit des Leistungsschalters 14 festlegt. Der Zeitgeber 17 wird angestoßen von einem Spannungssprung, der an der Speicherdrossel 15 bei einem Schaltvorgang des Leistungsschalters 14 auftritt. Die Spannung an der Speicherdrossel 15 springt an der Verbindung zwischen Speicherdrossel 15 und dem Leistungsschalter 14 zwischen Spannungen, die an der Eingangsklemme 10 oder an der anderen Eingangsklemme 11 auftreten.

Die zwischen den Ausgangsklemmen 12, 13 auftretende Ausgangsspannung U_{A}, die einer Betriebsspannung der Last 21 entspricht, kann mit dem Spannungsbegrenzungselement 19, beispielsweise einer Zenerdiode, auf einen vorgegebenen Wert stabilisiert werden. Bei einem Überschreiten der an der Ausgangsklemme 12 liegenden Spannung der durch das Spannungsbegrenzerelement vorgegebenen Spannung gibt das Spannungsbegrenzungselement ein Signal an die Ansteuerung 16 ab, die daraufhin die Ausschaltzeit auf einen Wert erhöht, der ausreicht, die Spannung an der Klemme 12 aufrechtzuerhalten.

Der in Figur 2 als Blockschaltbild dargestellte Aufwärtswandler arbeitet folgendermaßen:

Der erfindungsgemäße Spannungswandler gemäß Figur 2 wandelt die zwischen den Eingangsklemmen 10, 11 liegende Eingangsspannung U_{B} in eine höhere Ausgangsspannung U_{A}, die zwischen den Ausgangsklemmen 12, 13 auftritt. Der wesentliche Unterschied zu dem Abwärtswandler nach Figur 1 liegt darin, daß anstelle des Leistungsschalters 14 der andere Leistungsschalter 22 vorgesehen ist, der ausgangsseitig nach der Speicherdrossel 15 angeordnet ist. Der Leistungsschalter 22 verbindet ausgangsseitig die Speicherdrossel 15 entweder mit der Ausgangsklemme 12 oder mit der Eingangsklemme 11.

Während bei dem in Figur 1 gezeigten Ausführungsbeispiel stets ein Stromfluß zwischen der Speicherdrossel 15 und der Ausgangsklemme 12 oder dem Glättungskondensator 20 auftritt, treten bei dem Ausführungsbeispiel nach Figur 2 Unterbrechungen im Stromfluß zwischen der Speicherdrossel 15 und der Ausgangsklemme 12 oder dem Glättungskondensator 20 auf. Der Abwärtswandler nach Figur 1 wird deshalb auch als Durchflußwandler und der Aufwärtswandler nach Figur 2 als Sperrwandler bezeichnet.

Die erfindungsgemäß vorgesehenen Maßnahmen, das Schalten des Leistungsschalters 22 in Abhängigkeit vom dem in der Speicherdrossel 15 fließenden Stroms vorzunehmen, sowie den eingenommenen Zustand in Abhängigkeit von der vom Zeitgeber 17 festgelegten Zeit beizubehalten, stimmt in den Ausführungsbeispielen überein. Bei dem in Figur 2 gezeigten Ausführungsbeipiel wird als Einschaltzustand des Leistungsschalters 22 derjenige Zustand verstanden, bei dem die Speicherdrossel 15 mit der Eingangsklemme 11 verbunden ist.

Die erfindungsgemäßen Maßnahmen eignen sich auch für Wandler, welche die zwischen den Eingangsklemmen 10, 11 liegende Eingangsspannung U_{B} in eine andere Ausgangsspannung U_{A} umsetzen und gleichzeitig die Polarität invertieren.

Eine andere, besonders vorteilhafte Ausgestaltung sieht eine Kombination eines Abwärtswandlers mit einem Aufwärtswandler vor. Der Vorteil dieser Kombination liegt darin, daß die zwischen den Eingangsklemmen 10, 11 liegende Eingangsspannung U_{B} sowohl unterhalb als auch oberhalb der vorgegebenen Ausgangsspannung U_{A} liegen kann. Figur 3 zeigt ein Detailschaltbild eines solchen Ausführungsbeispiels mit einer Kombination eines Abwärtswandlers und eines Aufwärtswandlers.

Der erste Leistungstransistor 14a in Verbindung mit der ersten Freilaufdiode 14b entspricht dem in Figur 1 gezeigten Leistungsschalter 14 und der zweite Leistungstransistor 22a in Verbindung mit der zweiten Freilaufdiode 22b entspricht dem in Figur 2 gezeigten Leistungsschalter 22. Die Speicherdrossel 15 ist für beide Wandler gemeinsam vorgesehen.

Die in Figur 3 gezeigte Schaltung ist beispielhaft abgestellt auf ein Überschreiten des Schwellwerts des in der Speicherdrossel 15 fließenden Stroms, das ein Abschalten der Schalttransistoren 14a, 22a zur Folge hat. Der mit der Widerstands-Kondensator-Kombination 17a, 17b realisierte Zeitgeber 17 legt die Ausschaltzeit der beiden Schalttransistoren 14a, 22a fest.

Die in Figur 3 gezeigte Schaltungsanordnung arbeitet folgendermaßen:

Nach dem Anlegen der Eingangsspannung U_{B} zwischen die Eingangsklemmen 10, 11 und einem Auftreten der Hilfsspannung U_{H} sind beide Schalttransistoren 14a, 22a zunächst eingeschaltet. Ein Strom fließt über den ersten Schalttransistor 14a, über die Speicherdrossel 15, über die Trenndiode 30, über den zweiten Schalttransistor 22a sowie über den Strommeßwiderstand 31 nach Masse M, die mit der Eingangsklemme 11 identisch ist. Mit zunehmenden Strom steigt die am Strommeßwiderstand 31 abgreifbare Spannung. Der Stromanstieg und somit der Spannungsanstieg am Strommeßwiderstand 31 setzt sich solange fort, bis der Steuertransistor 33 durchschaltet. Die Steuerspannung des Steuertransistors 33 legt demnach den vorzugebenden Schwellwert als Maß für den in der Speicherdrossel 15 fließenden Strom fest. Schaltet der Steuertransistor 33 durch, so werden der zweite Transistor 22a und über den Strombegrenzungswiderstand 35 auch der erste Schalttransistor 14a abgeschaltet. Der in der Speicherdrossel 15 fließende Strom will weiterfließen. Er kommutiert vom ersten Schalttransistor 14a zur ersten Freilaufdiode 14b. Die Spannung an der Speicherdrossel 15 wird eingangsseitig von der ersten Freilaufdiode 14b auf nahezu Massepotential gezogen. Ausgangsseitig springt dagegen das Potential an der Speicherdrossel 15 auf ein höheres Potential, so daß die zweite Freilaufdiode 22b leitet und die Speicherdrossel 15 mit der Ausgangsklemme 12 verbindet. Der Strom fließt entweder in eine in Figur 3 nicht näher gezeigte Last oder in den Glättungskondensator, der im gezeigten Ausführungsbeispiel aus einem ersten Glättungskondensator 20a mit einer kleinen Kapazität und aus einem zweiten Glättungskondensator 20b mit einer hohen Kapazität zusammengesetzt ist.

Nach dem Ausschalten der beiden Leistungstransistoren 14a, 22a wird der im Strommeßwiderstand 31 fließende Strom zu Null. Die Schaltbedingung für den Steuertransistor 33 wäre damit aufgehoben. Um diesen Zustand zu vermeiden, ist der Zeitgeber 17 vorgesehen, der im gezeigten Ausführungsbeispiel als Widerstands-Kondensator-Kombination 17a, 17b realisiert ist. Der ausgangsseitig an der Speicherdrossel 15 auftretende Spannungssprung, im gezeigten Ausführungsbeispiel ein positiver Spannungssprung, hält über die Widerstands-Kondensator-Kombination 17a, 17b den Steuertransistor 33 für eine vorgegebene Zeit noch im durchgeschalteten Zustand. Die Zeit ist von der Zeitkonstanten der Widerstands-Kondensator-Kombination 17a, 17b festgelegt. Nachdem der Kondensator 17b aufgeladen ist, schaltet der Steuertransistor 33 ab. Somit ist die Ausschaltzeit beendet; die Einschaltzeit beginnt. Ein Periode ist dann abgeschlossen, wenn die Schaltschwelle zum Durchschalten des Steuertransistors 33 in Abhängigkeit von dem am Strommeßwiderstand 31 auftretenden Potential wieder erreicht ist.

Nach dem Ausschalten des Steuertransistors 33 wird der Kondensator 17b über den Ladewiderstand 34 geladen. Während des Ausschaltens springt das Potential am Kondensator 17b auf negative Werte. Damit die Spannung am Basisanschluß des Steuertransistors 33 nicht negativ, beispielsweise < -0,5 V wird, ist die Schutzdiode 32 vorgesehen, die negative die Spannung auf unschädliche Werte klemmt.

Das als Zenerdiode realisierte Spannungsbegrenzungselement 19 begrenzt die zwischen den Ausgangsklemmen 12, 13 abgreifbare Ausgangsspannung U_{A} auf einen vorgegebenen Wert. Ein Durchbrechen der Zenerdiode 19 führt zum Durchschalten des Steuertransistors 33 und somit sofort zum Abschalten der beiden Schalttransistoren 14a, 22a. Gegebenenfalls ist ein Schutzwiderstand zwischen dem Basisanschluß des Steuertransistors 33 und der Zenerdiode 19 vorzusehen, insbesondere dann, wenn die Ausgangsspannung U_{A} oberhalb von der zulässigen Basis-Emitter-Spannung des Steuertransistors 33 liegt. Das Spannungsbegrenzungselement 19 kann, unabhängig von dem in der Speicherdrossel 15 fließenden Strom ein Ausschalten der Leistungstransistoren 14a, 22a bewirken. Weiterhin kann das Spannungsbegrenzungselement 19 die Ausschaltzeit unabhängig von der vom Zeitgeber 17 vorgegebenen Zeit gegebenenfalls verlängern. Die Verwendung des Spannungsbegrenzungselements 19 ermöglicht die Bereitstellung einer konstanten Ausgangsspannung U_{A}. Auch ohne den Einsatz des Spannungsbegrenzungselements 19 bleibt die Ausgangsspannung U_{A} innerhalb gewisser Grenzen konstant, wobei die Grenzen insbesondere von dem durch die Last 21 fließenden Strom festgelegt werden. Ohne das Spannungsbegrenzungselement 19 beruht die Regelung ausschließlich auf dem in der Speicherdrossel 15 fließenden Strom in Verbindung mit dem Strommeßwiderstand 31 und dem als Vergleicher und als Schalter wirkenden Steuertransistor 33.

## Patentansprüche

1. Spannungswandler mit einer Speicherdrossel (15), mit wenigstens einem Leistungsschalter (14, 14a, 22, 22a), mit einem Sensor (18, 31) zum Erfassen des in der Speicherdrossel (15) fließenden Stroms, mit Mitteln (33) zum Vergleich des erfaßten Stroms mit einem vorgegebenen Schwellenwert, wobei bei einem Durchschreiten des Schwellenwertes der Leistungsschalter (14, 14a, 22, 22a) geschaltet wird, mit einem als Widerstands-Kondensator-kombination ausgebildeten Zeitgeber (17, 17a, 17b), der den Leistungsschalter (14, 14a, 22, 22a) für die vom Zeitgeber (17, 17a, 17b) festgelegte Zeit in einem vorhandenen Schaltzustand hält, dadurch gekennzeichnet, daß der Zeitgeber (17, 17a, 17b) so an die Speicherdrossel angeschlossen ist, daß er von einem Spannungssprung, der an der Speicherdrossel (15) infolge des Schaltens des Leistungsschalters (14, 14a, 22, 22a) auftritt, angestoßen wird.

2. Spannungswandler nach Anspruch 1, dadurch gekennzeichnet, daß bei einem Überschreiten des Schwellwerts der Leistungsschalter (14, 14a, 22, 22a) abschaltet, und daß der Leistungsschalter (14, 14a, 22, 22a) für die vom Zeitgeber (17, 17a, 17b) festgelegte Zeit im ausgeschalteten Zustand ist.

3. Spannungswandler nach Anspruch 1, dadurch gekennzeichnet, daß beim Unterschreiten des Schwellwerts der Leistungsschalter (14, 14a, 22, 22a) einschaltet, und daß der Leistungsschalter (14, 14a, 22, 22a) für die vom Zeitgeber (17, 17a, 17b) festgelegte Zeit im eingeschalteten Zustand ist.

4. Spannungswandler nach Anspruch 1, dadurch gekennzeichnet, daß als Sensor ein Strommeßwiderstand (31) vorgesehen ist.

5. Spannungswandler nach Anspruch 1, dadurch gekennzeichnet, daß als Vergleichsmittel ein Steuertransistor (33) vorgesehen ist, wobei der Schwellwert für den Vergleich durch die Einschaltspannung des Transistors (33) gegeben ist.

6. Spannungswandler nach Anspruch 1, dadurch gekennzeichnet, daß ein an einer Ausgangsklemme (12) des Spannungswandlers angeschlossenes Spannungsbegrenzungselement (19) vorgesehen ist, das beim Überschreiten der Begrenzungsspannung den Leistungsschalter (14, 14a, 22, 22a) im ausgeschalteten Zustand hält.

7. Spannungswandler nach Anspruch 6, dadurch gekennzeichnet, daß als Spannungsbegrenzungselement (19) eine Zenerdiode vorgesehen ist.

8. Spannungswandler nach Anspruch 1, dadurch gekennzeichnet, daß eine Kombination aus einem Abwärtswandler und einem Aufwärtswandler vorgesehen ist, wobei eine gemeinsame Speicherdrossel (15) vorgesehen ist.

9. Spannungswandler nach einem der vorhergehenden Ansprüche, gekennzeichnet durch die Verwendung in einem Kraftfahrzeug.

## Claims

1. Voltage transformer comprising a smoothing choke (15), having at least one power switch (14, 14a, 22, 22a), having a sensor (18, 31) for detecting the current flowing in the smoothing choke (15), having means (33) for comparing the detected current with a predetermined threshold value, the power switch (14, 14a, 22, 22a) being switched when the threshold value is passed, comprising a timer (17, 17a, 17b) constructed as resistor-capacitor combination, which keeps the power switch (14, 14a, 22, 22a) in an existing switching state for the time established by the timer (17, 17a, 17b), characterized in that the timer (17, 17a, 17b) is connected to the smoothing choke in such a manner that it is activated by a voltage jump which occurs at the smoothing choke (15) due to the switching of the power switch (14, 14a, 22, 22a).

2. Voltage transformer according to Claim 1, characterized in that the power switch (14, 14a, 22, 22a) switches off when the threshold value is exceeded, and that the power switch (14, 14a, 22, 22a) is in the switched-off state for the time established by the timer (17, 17a, 17b).

3. Voltage transformer according to Claim 1, characterized in that the power switch (14, 14a, 22, 22a) switches on when the value drops below the threshold value, and in that the power switch (14, 14a, 22, 22a) is in the switched-on state for the time established by the timer (17, 17a, 17b).

4. Voltage transformer according to Claim 1, characterized in that a current sensing resistor (31) is provided as sensor.

5. Voltage transformer according to Claim 1, characterized in that a control transistor (33) is provided as comparison means, the threshold value for the comparison being given by the turn-on voltage of the transistor (33).

6. Voltage transformer according to Claim 1, characterized in that a voltage limiting element (19) connected to an output terminal (12) of the voltage transformer is provided which keeps the power switch (14, 14a, 22, 22a) in the switched-off state when the limiting voltage is exceeded.

7. Voltage transformer according to Claim 6, characterized in that a zener diode is provided as voltage limiting element (19).

8. Voltage transformer according to Claim 1, characterized in that a combination of a stepping-down transformer and a stepping-up transformer is provided, a common smoothing choke (15) being provided.

9. Voltage transformer according to one of the preceding claims, characterized by its use in a motor vehicle.

## Revendications

1. Transformateur de tension comprenant une bobine accumulatrice (15), au moins un commutateur de puissance (14, 14a, 22, 22a), un capteur (18, 31) qui détecte le courant traversant la bobine (15), les moyens (33) pour comparer le courant ainsi détecté à un seuil prédéterminé, et
lors du passage du seuil, le commutateur de puissance (14, 14a, 22, 22a) est commuté,
un générateur de temps réalisé sous la forme d'une combinaison d'une résistance et d'un condensateur (17, 17a, 17b) qui maintient le commutateur de puissance (14, 14a, 22, 22a) dans son état de commutation pendant une durée fixée par le générateur de temps (17, 17a, 17b),
caractérisé en ce que
le générateur de temps (17, 17a, 17b) est relié à la bobine accumulatrice pour être déclenché par un saut de tension, produit sur la bobine accumulatrice (15) par la commutation du commutateur de puissance (14, 14a, 22, 22a).

2. Transformateur de tension selon la revendication 1,
caractérisé en ce que
lors du dépassement du seuil, le commutateur de puissance (14, 14a, 22, 22a) se bloque et reste à l'état bloqué pendant la durée fixée par le générateur de temps (17, 17a, 17b).

3. Transformateur de tension selon la revendication 1,
caractérisé en ce qu'
en cas de dépassement vers le bas du seuil, le commutateur de puissance (14, 14a, 22, 22a) se débloque et il reste à l'état branché pendant la durée fixée par le générateur de temps (17, 17a, 17b).

4. Transformateur de tension selon la revendication 1,
caractérisé en ce que
le capteur est une résistance de mesure de courant (31).

5. Transformateur de tension selon la revendication 1,
caractérisé en ce que
le comparateur est un transistor de commande (33), le seuil pour la comparaison correspondant à la tension de déblocage du transistor (33).

6. Transformateur de tension selon la revendication 1,
caractérisé en ce par
un élément de limitation de tension (19) relié à une borne de sortie (12) du transformateur de tension, et en cas de dépassement de la tension limite, cet élément maintient le commutateur de puissance (14, 14a, 22, 22a) à son état bloqué.

7. Transformateur de tension selon la revendication 6,
caractérisé en ce que
l'élément de limitation de tension (19) est une diode Zener.

8. Transformateur de tension selon la revendication 1,
caractérisé par
une combinaison d'un transformateur abaisseur et d'un transformateur élévateur avec une bobine accumulatrice (15) commune.

9. Transformateur de tension selon l'une quelconque des revendications précédentes,
caractérisé par
son application à un véhicule automobile.
